# EUROPÄISCHE PATENTANMELDUNG

(11) **EP 2 845 698 A1**
(43) Veröffentlichungstag der Anmeldung: **11.03.2015**
(21) Anmeldenummer: 14003121.2
(22) Anmeldetag: 09.09.2014
(51) Int. Cl.: B25J 11/00, B25J 15/00

(54) **Robotergreifer zum Wenden von Lebensmittelportionen**

(30) Priorität: 10.09.2013 DE 102013015020
(71) Anmelder: Weber Maschinenbau GmbH Breidenbach, 35236 Breidenbach (DE)
(72) Erfinder: Kuhmichel, Christoph, 57319 Bad Berleburg (DE)
(74) Vertreter: Grünecker, Kinkeldey, Stockmair & Schwanhäusser

(57) **Zusammenfassung**

Die vorliegende Erfindung betrifft einen Greifer (1) für einen Roboter zum Handhaben von Lebensmittelportionen (10), wobei der Greifer (1) eine Grundstruktur (2), die an dem Roboter anbringbar ist, und ein Greiferelement (4) umfasst, mit einer Greiferauflage (11), die unter eine Lebensmittelportion (10) eingeführt werden kann. Das Greiferelement (4) umfasst ein Haltemittel (13), das in Richtung der Flächennormalen F der Auflagefläche der Greiferauflage (11) von der Greiferauflage (11) beabstandet angeordnet ist. Das Greiferelement (4) ist, insbesondere zum Wenden der Lebensmittelportion (10), bezüglich der Grundstruktur (2) um eine Drehachse (A) verdrehbar. Die Erfindung betrifft weiterhin ein Verfahren zum Handhaben von Lebensmittelportionen (10), mit einem Greifer (1) eines Roboters.

## Beschreibung

Die vorliegende Erfindung bezieht sich auf einen Greifer für einen Roboter zum Handhaben von Lebensmittelportionen, wobei der Greifer eine Grundstruktur, die an dem Roboter anbringbar ist, und ein Greiferelement mit einer Greiferauflage, die unter eine Lebensmittelportion eingeführt werden kann, umfasst. Die Erfindung bezieht sich weiterhin auf einen Roboter mit einem derartigen Greifer und ein Verfahren zum Handhaben von Lebensmittelportionen.

Im Stand der Technik ist es bekannt, dass Lebensmittelportionen, beispielsweise Stapel von aufgeschnittenen Lebensmittelscheiben, insbesondere aufgeschnittene Wurst oder aufgeschnittener Käse, oder Lebensmittelstücke, insbesondere Käsestücke oder Frischfleischstücke, vor dem Verpacken gewendet werden. Dies kann durch eine separat vorgesehene Vorrichtung geschehen, die einer Lebensmittelschneidevorrichtung nachgeordnet ist.

Weiterhin ist es im Stand der Technik bekannt, dass Lebensmittelportionen mit einem Roboter, insbesondere einem Delta-Roboter, von einem Förderband in eine Lebensmittelverpackung eingelegt werden.

Das Wenden der Lebensmittelportionen ist gewünscht, da viele Lebensmittelpackungen auf einer bestimmten Seite Sichtfenster oder Aufdrucke aufweisen, und die Lebensmittelportion entsprechend orientiert in der Packung angeordnet werden sollen, damit sie ein ansprechendes Erscheinungsbild haben.

Weiterhin sind im Stand der Technik Greifer mit Greiferelementen bekannt, die eine Lebensmittelportion beidseitig untergreifen. Zusätzlich kann ein Haltemittel, insbesondere ein Niederhalter, vorgesehen sein, das im Wesentlichen zentral an einer Grundstruktur des Greifers befestigt ist, und die Lebensmittelportion beim Untergreifen in Position hält, während sich die Greiferelemente relativ zur Lebensmittelportion und zum Haltemittel bewegen.

Es ist die Aufgabe der Erfindung, die Handhabung von Lebensmittelportionen weiter zu optimieren, so dass insbesondere ein betriebssicheres Wenden der Lebensmittelportionen erfolgen kann und die Handhabungsleistung erhöht werden kann.

Dies wird ermöglicht durch einen Greifer für einen Roboter zum Handhaben von Lebensmittelportionen, wobei der Greifer eine Grundstruktur, die an dem Roboter anbringbar ist, und ein Greiferelement mit einer Greiferauflage, die unter eine Lebensmittelportion eingeführt werden kann, umfasst, wobei das Greiferelement ein Haltemittel umfasst, das in Richtung der Normalen der Auflagefläche der Greiferauflage von der Greiferauflage beabstandet angeordnet ist, und wobei das Greiferelement insbesondere zum Wenden der Lebensmittelportion bezüglich der Grundstruktur um eine Drehachse verdrehbar ist. Insbesondere ermöglicht das bezüglich der Grundstruktur des Greifers verdrehbare Greiferelement, dass die Lebensmittelportionen während des Verfahrens des Roboters gewendet werden können, so dass keine zusätzliche Zeit für den Wendevorgang der Lebensmittelportionen veranschlagt werden muss. Das Haltemittel ermöglicht, dass die Lebensmittelportion nicht bezüglich des Greiferelements verrutscht, wenn sie durch Verdrehen des Greiferelements bezüglich der Grundstruktur gewendet wird. Vorteilhafterweise erfolgt eine Verdrehung des Greiferelements um die Drehachse um mindestens 90°, gewöhnlicherweise um ungefähr 180°. Insbesondere ist für den Wendevorgang keine Verdrehung um 180° notwendig, wenn die Lebensmittelportionen von schräg liegenden Oberflächen aufgenommen werden, in schräg liegende Lebensmittelverpackungen eingelegt werden, oder schräg in Lebensmittelverpackungen eingelegt werden.

Die Lebensmittelportion ist insbesondere ein Stapel von aufgeschnittenen Lebensmittelscheiben, kann aber auch ein Lebensmittelstück sein. Lebensmittelscheiben umfassen insbesondere Wurstscheiben und Käsescheiben. Bei dem Lebensmittelstück handelt es sich vornehmlich um ein Wurst-, Käse- oder Schinkenstück.

Vorteilhafterweise ist an der Grundstruktur ein Drehstellglied zum Verdrehen der Drehachse angebracht ist. Das Drehstellglied ist insbesondere an eine Maschinensteuerung angeschlossen, um die Verdrehung in Abhängigkeit des durchzuführenden Handhabungsvorgangs zu steuern.

In einer Ausführungsform treibt das Drehstellglied die Drehachse direkt an. Dafür ist die Drehachse vornehmlich am Drehstellglied angeflanscht.

Das Drehstellglied ist insbesondere ein Motor, dessen Motorachse parallel zur Drehachse angeordnet ist. Dies ermöglicht eine direkte oder wenigstens platzsparende Übertragung des Drehmoments zur Drehachse.

In manchen Ausführungsformen steht das Drehstellglied über ein Getriebe, das insbesondere Stirnräder, Reibräder, Zahnriemen usw. umfasst, mit der Drehachse in Verbindung. Damit kann eine Übersetzung oder Umlenkung der Drehbewegung des Drehstellglieds erfolgen.

Insbesondere weist die Drehachse in eine andere Richtung als die Flächennormale der Auflagefläche der Greiferauflage. Nachdem die Lebensmittelportion gewöhnlich flach auf der Greiferauflage aufliegt, ermöglicht dies eine Reorientierung der Lebensmittelportion im Raum, und insbesondere das Wenden der Lebensmittelportion.

Vorteilhafterweise ist die Drehachse im Wesentlichen orthogonal zur Flächennormalen der Greiferauflage. Folglich kann eine flach auf der Greiferauflage aufliegende Lebensmittelportion effektiv gewendet werden. Vorteilhafterweise verläuft die Drehachse zwischen der Greiferauflage und dem Haltemittel. Da die Lebensmittelportion ebenfalls zwischen der Greiferauflage und dem Haltemittel angeordnet ist, kann somit ein Verdrehen der Lebensmittelportion erfolgen, ohne dass diese wesentlich verschwenkt wird. Damit wird ein Wenden der Lebensmittelportion mit geringen Raumanforderungen ermöglicht.

Vorteilhafterweise bildet das Haltemittel eine Halteauflage mit einer der Greiferauflage zugewandten Auflagefläche. Somit kann die Lebensmittelportion zwischen der Halteauflage und der Greiferauflage erfasst werden. Dies ermöglicht insbesondere, dass Lebensmittelportionen mit geringer Stabilität, wie zum Beispiel aufgeschnittene Lebensmittelscheiben, vornehmlich Wurstscheiben oder Käsescheiben, gewendet werden können, ohne sich wesentlich zu verformen. Insbesondere liegen die Lebensmittelportionen nach dem Wenden auf der Halteauflage auf, die weiterhin dazu ausgelegt ist, die Lebensmittelportion auf einer gewünschten Ablagefläche abzulegen. Insbesondere hat die Halteauflage des Haltemittels eine Größe, die mindestens der Erstreckung der Lebensmittelportion darauf entspricht.

Alternativ zu einer Ausführungsform, in der das Haltemittel eine Halteauflage umfasst, kann auch ein Haltemittel in Form eines geringflächigen Niederhalters vorgesehen sein. Dies ist insbesondere für strukturfestere Lebensmittelportionen denkbar.

Weiterhin kann das Haltemittel auch durch einen oder mehrere Saugnäpfe gebildet oder ergänzt werden. Insbesondere können Saugnäpfe auch in der Greiferauflage vorgesehen sein, um ein Verrutschen der Lebensmittelportion darauf zu verhindern.

In einer bevorzugten Ausführungsform umfasst die Greiferauflage ein Transportband zur Aufnahme und Ablage der Lebensmittelportion. Ein derartiges Transportband kann nur in der Greiferauflage vorgesehen sein, oder im Haltemittel und in der Greiferauflage vorgesehen sein. Das Transportband ermöglicht insbesondere, dass durch Verfahren des Transportbandes die Lebensmittelportion auf der Auflagefläche verfahren werden kann, insbesondere auf diese aufgenommen und von dieser abgelegt werden kann.

In einer anderen Ausführungsform umfasst nur das Haltemittel ein Transportband zur Aufnahme und Ablage der Lebensmittelportion. Insbesondere kann das Haltemittel mit Transportband mit einer starren Greiferauflage ohne Transportband kombiniert werden. Vorteilhafterweise erstreckt sich das Transportband des Haltemittels zumindest bis zum vorderen Ende der Greiferauflage, das heißt zumindest bis zur Aufnahmekante der Greiferauflage, um zu ermöglichen, dass durch Antrieb des Transportbands des Haltemittels eine Lebensmittelportion auf die starre Greiferauflage geschoben werden kann.

In einer weiteren Ausführungsform kann sowohl die Greiferauflage als auch das Haltemittel jeweils ein Transportband aufweisen. Vorteilhafterweise ist die Bewegung der Transportbänder mechanisch oder steuerungstechnisch synchronisiert.

Insbesondere kann das Greiferelement bezüglich der Grundstruktur des Greifers translatorisch bewegbar sein, um die Lebensmittelportion zu untergreifen. Somit kann während des Aufnehmens der Lebensmittelportion mit dem Greiferelement der Roboter stillstehen. Insbesondere kann bezüglich der Bewegung des Greiferelements zu der Grundstruktur eine höhere Genauigkeit als für den Roboter vorgesehen sein, so dass eine präzise Aufnahme und Ablage der Lebensmittelportion möglich ist. Da diese Genauigkeit nicht durch den Roboter erreicht werden muss, kann der Roboter so ausgelegt sein, dass seine Verfahrgeschwindigkeit optimiert wird. Alternativ kann auch eine Verschiebung des gesamten Greifers mittels des Roboters erfolgen.

Vorteilhafterweise sind die Bewegungen des Transportbandes und die translatorische Bewegung des Greiferelements synchronisiert. Insbesondere ist das Transportband an die Grundstruktur oder einem stationären Teil des Greiferelements gekoppelt, so dass keine zusätzlichen Antriebsmittel für das Transportband notwendig sind. Vorteilhafterweise ist das Transportband an der Grundstruktur befestigt, so dass die Bewegung wenigstens eines Teils des Transportbandes durch die translatorische Bewegung des Greiferelements bedingt wird. Dabei kann ein Verbindungselement eingesetzt werden, das einen Drehfreiheitsgrad aufweist, so dass die Kopplung des Transportbandes an die Grundstruktur nicht der Verdrehbarkeit des Greiferelements bezüglich der Grundstruktur entgegensteht. Insbesondere ermöglicht die Synchronisierung der Bewegung des Greiferelements und der Bewegung des Transportbandes, das das Transportband im Bereich der Auflage der Lebensmittelportion stillsteht, während das Greiferelement die Lebensmittelportion unterfasst. Somit wird die Lebensmittelportion auf dem Transportband angeordnet, ohne sich wesentlich in ihrer Position zu verändern, während die Greiferauflage unter der Lebensmittelportion angeordnet wird.

Alternativ kann auch vorgesehen sein, dass ein Mittel zur translatorischen Verstellung des Greiferelements, vornehmlich in Richtung der Drehachse, zwischen der Greiferauflage und dem Drehlager angeordnet ist, das die Verdrehung des Greiferelements bezüglich der Grundstruktur ermöglicht. In diesem Fall kann eine Anbindung des Transportbandes an den nicht translatorisch verstellbaren Teil des Greiferelements erfolgen, wobei dann kein Drehfreiheitsgrad für diese Koppelung notwendig ist.

In einer Ausführungsform sind die Greiferauflage und das Haltemittel mit einem Stellglied zueinander hinbewegbar. Dies ermöglicht, dass die Lebensmittelportion zwischen der Greiferauflage und dem Haltemittel eingeklemmt werden kann und somit in dieser Position während des Verdrehens des Greiferelements festgelegt ist. Entsprechend können die Greiferauflage und das Haltemittel mit dem Stellglied voneinander wegbewegt werden, um die Lebensmittelportion vor dem Ablegen freizugeben. Das Stellglied kann insbesondere ein hydraulisches Stellglied, ein pneumatisches Stellglied oder ein elektromechanisches Stellglied sein. Besonders bevorzugt ist ein hydraulischer oder pneumatischer Stellzylinder vorgesehen.

In einer Ausführungsform ist nur das Haltemittel mit dem Stellglied zu der Greiferauflage hinbewegbar. Somit steht die Greiferauflage bezüglich des Greiferelements still, wird also nicht durch das Stellglied bewegt. Auch dies ermöglicht, dass die Lebensmittelportion zwischen dem Haltemittel und der Greiferauflage eingeklemmt und somit festgelegt werden kann.

Die Bewegung der Greiferauflage und des Haltemittels durch das Stellglied zueinander können insbesondere rein translatorische Bewegungen oder aber auch Verschwenkbewegungen sein. Für die Verschwenkbewegung ist insbesondere ein Verschwenklager in einem Randbereich der Greiferauflage und/oder des Haltemittels vorgesehen. Eine Linearbewegung kann durch eine Linearführung wie beispielsweise eine Schiene ermöglicht werden. Alternativ kann eine Linearbewegung auch lediglich durch einen pneumatischen oder hydraulischen Stellzylinder geführt werden.

Weiterhin ist es auch möglich, dass die Greiferauflage und das Haltemittel in geringem Abstand zueinander unbeweglich angeordnet sind, und dass ein Herausfallen der Lebensmittelportion durch seitliche Begrenzungen verhindert wird. Weiterhin ist es möglich, dass das Haltemittel in Richtung der Greiferauflage elastisch vorgespannt ist und die Lebensmittelportion durch die elastische Vorspannkraft hält.

In einer Ausführungsform sind zwei Greiferelemente vorgesehen, die bezüglich der Grundstruktur zueinander hinbewegt werden können, um von unterschiedlichen Seiten die Lebensmittelportion gleichzeitig zu untergreifen. Ein derartiger Doppelgreifer ermöglicht eine einfachere Aufnahme und Ablage der Lebensmittelportion ohne diese ungewollt zu verschieben. Insbesondere werden die Greiferelemente in gegensätzliche Richtungen bewegt. Vornehmlich werden somit gegenüberliegende Seiten der Lebensmittelportion gleichzeitig untergriffen.

Vorteilhafterweise ist zwischen dem Haltemittel und der Greiferauflage ein elastisches Element vorgesehen, das das Haltemittel hin zur Greiferauflage vorspannt. Dies ermöglicht, dass die Lebensmittelportion durch eine elastische Kraft des elastischen Elements auf der Greiferauflage gehalten wird. Dabei kann das Haltemittel fest oder verschieblich bezüglich der Greiferauflage angebracht sein, wobei das Haltemittel ausschließlich durch die Kraft des elastischen Elements auf die Lebensmittelportion wirkt. Weiterhin kann durch eine Kombination einer Bewegung des Haltemittels durch ein Stellglied und der dadurch bewirkten Verformung des elastischen Elements ein sicherer Halt für die Lebensmittelportion ermöglicht werden. Insbesondere kann das elastische Element ein Federelement oder ein elastischer Kunststoff oder Schaum sein.

Durch die Erfindung wird weiterhin ein Roboter mit einem erfindungsgemäßen Greifer bereitgestellt, wobei der Roboter insbesondere ein Delta-Roboter ist. Ein Delta-Roboter ist ein Roboter mit einer Delta-Kinematik, wobei der Roboter insbesondere eine Roboterbasis und eine Werkzeugbefestigung umfasst. Die Roboterbasis und die Werkzeugbefestigung sind durch wenigstens drei Kombinationen aus einem oberen Roboterarm und einem unteren Roboterarm verbunden, wobei in jeder der Kombinationen der obere Roboterarm und der untere Roboterarm schwenkbar miteinander verbunden sind. Durch das unabhängige Verschwenken der einzelnen Roboterarme kann eine schnelle seitliche Versetzung der Werkzeugbefestigung ermöglicht werden, wodurch insbesondere in Pick-and-Place-Anwendungen für Lebensmittelportionen ein schnelles, seitliches Versetzen der Lebensmittelportionen ermöglicht wird.

Alternativ kann der Roboter auch ein Portal-Roboter sein, wobei der erfindungsgemäße Greifer durch den Portal-Roboter linear in mindestens eine und vornehmlich insbesondere drei lineare Richtungen verfahren werden kann.

Die Aufgabe der Erfindung wird weiterhin gelöst durch ein Verfahren zum Handhaben von Lebensmittelportionen mit einem Roboter, wobei zunächst eine Lebensmittelportion auf einer Greiferauflage eines Greiferelements angeordnet wird, dann das Greiferelement bezüglich einer Grundstruktur des Greifers verdreht wird, während die Lebensmittelportion von einem Haltemittel im Greiferelement gehalten wird, und schließlich die gewendete Lebensmittelportion abgelegt wird.

Vorteilhafterweise wird das Greiferelement angehoben, nachdem die Lebensmittelportion auf der Greiferauflage angeordnet wurde und bevor das Greiferelement verdreht wird. Dies ermöglicht ein kollisionsfreies Verdrehen des Greiferelements.

Das Verdrehen des Greiferelements erfolgt insbesondere um mindestens 90°, vornehmlich um 180°. In einer Ausführungsform des Verfahrens erfolgt das Verdrehen des Greiferelements um eine Drehachse, die in eine andere Richtung als die Flächennormale der Auflagefläche der Greiferauflage weist. Vorteilhafterweise ist die Drehachse im Wesentlichen orthogonal zur Flächennormalen der Auflagefläche.

In einer Ausführungsform umfasst der Schritt des Anordnens der Lebensmittelportion auf der Greiferauflage ein Einschieben der Greiferauflage unter die Lebensmittelportion. Insbesondere kann die Auflagefläche nur von einer Seite unter die Lebensmittelportion eingeschoben werden. In anderen Ausführungsformen können zwei Greiferelemente vorgesehen sein, die von unterschiedlichen Seiten mit ihrer Auflagefläche unter die Lebensmittelportion eingeschoben werden, und die gemeinsam um die gleiche Drehachse verdreht werden können.

Die Erfindung wird im Folgenden anhand von Ausführungsformen mit Bezug auf die folgenden Figuren weitergehend erläutert.
- Figur 1: zeigt eine seitliche Ansicht eines Greifers gemäß einer ersten Ausführungsform der Erfindung.
- Figur 2: zeigt eine seitliche Ansicht eines Greifers gemäß einer zweiten Ausführungsform der Erfindung.
- Figur 3: zeigt eine seitliche Ansicht eines Greifers gemäß einer dritten Ausführungsform der Erfindung.
- Figur 4: zeigt eine seitliche Ansicht eines Greifers gemäß einer vierten Ausführungsform der Erfindung.
- Figur 5: zeigt eine seitliche Ansicht eines Greifers gemäß einer fünften Ausführungsform der Erfindung.
- Figur 6: zeigt eine seitliche Ansicht eines Greifers gemäß einer sechsten Ausführungsform der Erfindung.
- Figur 7: zeigt eine seitliche Ansicht eines Greifers gemäß einer siebten Ausführungsform der Erfindung, der an einem teilweise dargestellten Delta-Roboter befestigt ist.

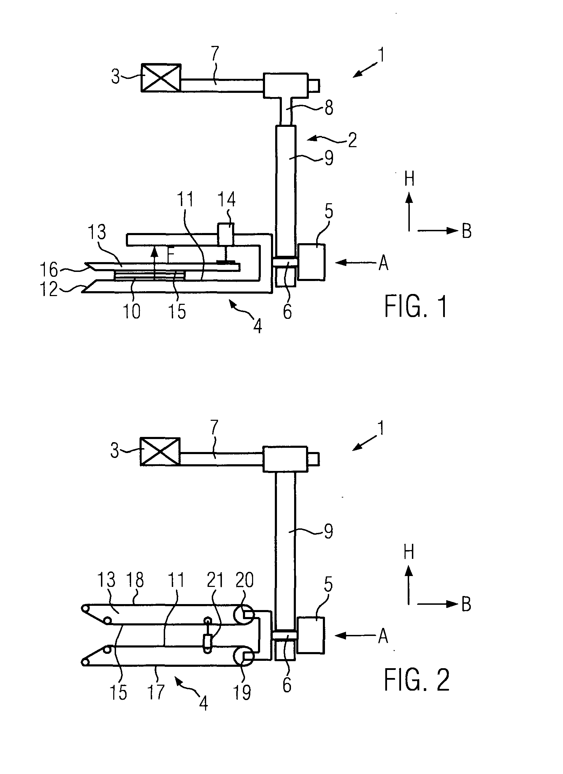

In Figur 1 ist eine erste Ausführungsform eines erfindungsgemäßen Greifers 1 in einer Seitenansicht dargestellt. Der Greifer 1 umfasst eine Grundstruktur 2, die in ihrem oberen Bereich ein Befestigungselement 3 aufweist, das ermöglicht, dass der Greifer 1 an einem nicht dargestellten Roboter befestigt werden kann. Das Befestigungselement 3 kann beispielsweise eine Befestigungsplatte sein, die mit Schrauben an einer Werkzeugbefestigung des Roboters befestigt wird, oder eine Schnellbefestigung, die eine Befestigung mittels Einrasten oder Verdrehen ermöglicht.

Im unteren Bereich der Grundstruktur ist ein Greiferelement 4 befestigt, das bezüglich der Grundstruktur 2 um eine horizontale Drehachse A verdreht werden kann. Dafür ist insbesondere ein Drehstellglied 5 an der Grundstruktur 2 befestigt. Das Drehstellglied 5 kann beispielsweise ein Servomotor sein. Ausgehend vom Drehstellglied 5 erstreckt sich eine Drehwelle 6 in Richtung der Drehachse A, wobei die Drehwelle 6 durch das Drehstellglied 5 bezüglich der Grundstruktur 2 verdrehbar ist. Insbesondere kann die Drehwelle 6 in einer Drehlagerung im unteren Bereich der Grundstruktur 2 gelagert sein.

Die Grundstruktur 2 besteht aus mehreren zueinander verschieblich gelagerten Trägern 7, 8, 9. Insbesondere ist ein oberer Träger 7 vorgesehen, auf dem ein Zwischenträger 8 in Breitenrichtung B verschieblich gelagert ist. An den Zwischenträger 8 schließt sich ein unterer Träger 9 an, der bezüglich des Zwischenträgers 8 in Hochrichtung H verstellbar ist. Zwischen dem Zwischenträger 8 und dem unteren Träger 9 ist eine Teleskopverbindung vorgesehen. Alternativ ist es aber auch möglich, den Zwischenträger 8 und den unteren Träger 9 nebeneinander anzuordnen und mit einer geeigneten Linearführung eine Verstellbarkeit des unteren Trägers 9 in Hochrichtung H zu ermöglichen. Die bewegliche Lagerung des Zwischenträgers 8 und des unteren Trägers 9 ermöglicht eine Bewegung des unteren Trägers in Breitenrichtung B und Hochrichtung H. Insbesondere sind nicht dargestellte Stellglieder vorgesehen, die gemäß einer Vorgabe einer Steuerung die relative Bewegung der Träger 7, 8, 9 ermöglichen. Somit kann nachdem ein Roboter den gesamten Greifer 1 in den Bereich einer gewünschten Position gefahren hat, die gewünschte Position des Greiferelements 4 durch Feineinstellung des Zwischenträgers 8 und unteren Trägers 9 erfolgen. Zudem ermöglicht die Verschiebung des Zwischenträgers 8 in Breitenrichtung B die Aufnahme einer Lebensmittelportion 10 mit dem Greiferelement 4, indem das Greiferelement 4 in Richtung der Lebensmittelportion 10 gefahren wird.

Das Greiferelement 4 weist eine Greiferauflage 11 auf, die ausgelegt ist, um unter die Lebensmittelportion 10 eingeführt zu werden. Dafür kann das vordere Ende 12 der Greiferauflage 11 insbesondere eine Abschrägung aufweisen, die es vereinfacht die Greiferauflage 11 unter die Lebensmittelportion 10 einzuführen, was insbesondere durch Bewegung des gesamten Greifers 1 mittels eines Roboters oder durch Bewegung des Zwischenträgers 8 und unteren Trägers 9 bezüglich des oberen Trägers 7 in Breitenrichtung B ermöglicht wird. In Figur 1 ist der Zustand dargestellt, in dem die Lebensmittelportion 10 bereits auf der Greiferauflage 11 aufliegt.

Ausgehend von der Greiferauflage 11 ist in Richtung der Flächennormalen F der Auflagefläche der Greiferauflage 11 ein Haltemittel 13 vorgesehen. Das Haltemittel 13 kann insbesondere mittels eines Stellglieds 14 in Richtung der Flächennormalen F zu der Greiferauflage 11 hin und von der Greiferauflage 11 weg bewegt werden. Das Stellglied 14 ist ein pneumatischer oder hydraulischer Zylinder, kann aber auch ein elektrischer Linearstelltrieb sein. Weiterhin ist es auch denkbar, dass das Stellglied 14 das Haltemittel 13 nicht linear verfahrbar ist, sondern zu der Greiferauflage 11 hin und von der Greiferauflage 11 weg verschwenkbar ist.

Das Haltemittel 13 weist eine Halteauflage 15 auf, die dazu ausgelegt ist, in Kontakt mit der Lebensmittelportion 10 zu kommen. Die Halteauflage 15 kann ebenfalls ein schräg ausgeführtes vorderes Ende 16 aufweisen, das eine Aufnahme oder Ablage der Lebensmittelportion 10 vereinfacht. Die Lebensmittelportion 10 wird nach dem Aufnehmen auf die Greiferauflage 11 durch Verfahren des Haltemittels 13 zwischen der Greiferauflage 11 und der Halteauflage 15 eingeklemmt. Dann wird das Drehstellglied 5 angesteuert, und die Drehwelle 6 um ungefähr 180° zusammen mit dem gesamten Greiferelement 4 verdreht. Dadurch wird die Lebensmittelportion 10 gewendet. Während des Wendevorgangs kann der Greifer 1 durch den Roboter verfahren werden, so dass für das Wenden der Lebensmittelportion 10 keine zusätzliche Bearbeitungszeit veranschlagt werden muss. Nach dem Wenden der Lebensmittelportion 10 wird das Haltemittel 13 von der Greiferauflage 11 weggefahren, so dass die Lebensmittelportion 10 freigegeben wird, und die Lebensmittelportion 10 kann insbesondere durch Verkippen oder durch zusätzliche Fördermittel von der Halteauflage 15 des Haltemittels 13 abgelegt werden.

In Figur 2 ist eine zweite Ausführungsform eines erfindungsgemäßen Greifers 1 dargestellt, wobei nachfolgend vor allem die Unterschiede zur ersten Ausführungsform erläutert werden und verbleibende Merkmale zwischen den Ausführungsformen sich im Wesentlichen entsprechen. In der Ausführungsform gemäß Figur 2 ist der untere Träger 9 direkt verschieblich in Breitenrichtung B auf dem oberen Träger 7 gelagert. Somit kann eine Verstellung des Greiferelements 4 im Greifer 1 selbst nur in Breitenrichtung B erfolgen, während eine Verstellung in Hochrichtung H durch den Roboter ausgeführt wird, an dem der Greifer 1 mittels des Befestigungselements 3 befestigt ist. Die Verstellung des Greiferelements 4 in Breitenrichtung B ermöglicht insbesondere, dass eine Lebensmittelportion 10 auf der Greiferauflage 11 angeordnet werden kann.

Die Greiferauflage 11 wird teilweise oder insgesamt durch ein Trarisportband 17 gebildet. Wenn die Lebensmittelportion 10 aufgenommen werden soll, wird das Transportband 17 so angetrieben, dass es die Lebensmittelportion 10 in Richtung der Greiferauflage 11 bewegt. Dafür kann ein separater Antrieb für das Transportband 17 vorgesehen sein.

Das Haltemittel 13 kann ebenfalls ein Transportband 18 umfassen. Das Haltemittel 13 kann insbesondere bereits beim Aufnahmevorgang der Lebensmittelportion 10 mit dieser in Kontakt sein und durch Bewegung des Transportbands 18 den Aufnahmevorgang der Lebensmittelportion 10 in das Greiferelement 4 unterstützen. Alternativ kann das Haltemittel 13 beim Aufnahmevorgang der Lebensmittelportion 10 auch in einem Abstand zur Lebensmittelportion 10 gehalten werden. Die Greiferauflage 11 ist in einem Schwenklager 19 gelagert. Das Haltemittel 13 ist in einem Schwenklager 20 gelagert. Die Greiferauflage 11 und das Haltemittel 13 sind mit einem Stellglied 20 verbunden, das es ermöglicht, dass die Greiferauflage 11 und das Haltemittel 13 zueinander hin und voneinander weg bewegt werden können. Nachdem die Lebensmittelportion 10 auf der Greiferauflage 11 angeordnet wurde, wird das Stellglied 21 betätigt, so dass das Haltemittel 13 in Richtung der Greiferauflage 11 abgesenkt wird, und die Lebensmittelportion 10 zwischen dem Haltemittel 13 und der Greiferauflage 11 eingeklemmt wird. Dann wird das Drehstellglied 5 betätigt, und das Greiferelement 4 bezüglich der Grundstruktur 2 verdreht, so dass die Lebensmittelportion 10 gewendet wird.

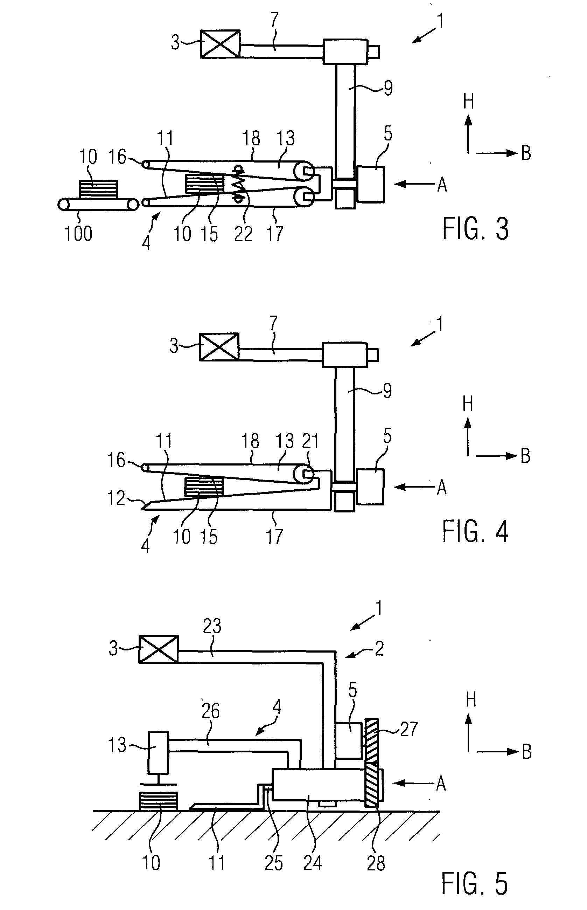

In Figur 3 ist eine dritte Ausführungsform eines erfindungsgemäßen Greifers 1 dargestellt. Der Greifer entspricht im Wesentlichen dem in Figur 2 dargestellten Greifer 1, wobei lediglich die Ausgestaltung des Greiferelements 4 unterschiedlich ist. Es ist ebenfalls ein Transportband 17 für die Greiferauflage 11 vorgesehen, und ein Transportband 18 für die Halteauflage 15 des Haltemittels 13. Wie bereits in Figur 2 ist die Greiferauflage 11 und das Halteauflage 15 im Wesentlichen gleich ausgestaltet. In Figur 3 ist für das Transportband 17 und das Transportband 18 an deren jeweiligen vorderen Enden 12, 16 nur eine Umlenkrolle vorgesehen, um das vordere Ende 12, 16 möglichst dünn auszugestalten, was die Aufnahme einer Lebensmittelportion 10 vereinfacht. Das Haltemittel 13 und die Auflage 11 sind zueinander mit einem elastischen Element 22, insbesondere in Form einer Feder vorgespannt. Dies ermöglicht, dass kein gesondertes Stellglied vorgesehen werden muss, und dass die Lebensmittelportion 10 dennoch sicher zwischen dem Haltemittel 13 und der Greiferauflage 11 gehalten werden kann.

Zur einfacheren Aufnahme der Lebensmittelportion 10 kann der Greifer 1 wie in Figur 3 gezeigt an ein Förderband 100 herangefahren werden, so dass die Greiferauflage 11 des Greifers 1 zur oberen Seite des Förderbands 100 bündig ist. Dann kann die Lebensmittelportion 10 von dem Förderband 100 auf die Greiferauflage 11 des Greifers 1 verfahren werden. Entsprechend kann eine Lebensmittelportion 10 nach der Handhabung durch den Greifer 1 auch wieder auf einem entsprechenden Förderband 100 abgelegt werden. Das Förderband 100 kann sich insbesondere an eine Lebensmittelschneidmaschine, beispielsweise einen Slicer anschließen. Wenn das Förderband 100 ein Ablageband ist, kann es insbesondere zu einer Verpackungsmaschine hinführen.

In Figur 4 ist eine vierte Ausführungsform eines erfindungsgemäßen Greifers 1 dargestellt. Der Greifer entspricht im Wesentlichen dem in Figur 3 dargestellten Greifer 1, wobei lediglich die Ausgestaltung der Greiferauflage 11 unterschiedlich ist, und ein Stellglied 21 anstelle des elastischen Elements 22 vorgesehen ist. Es ist kein Transportband für die Greiferauflage 11 vorgesehen, die als starre Greiferauflage ausgebildet ist. Dafür ist ein Transportband 18 für die Halteauflage 15 des Haltemittels 13 vorgesehen. Das Transportband 18 des Haltemittels 13 erstreckt sich bis leicht über die Greiferauflage 11 hinaus, d.h. das vordere Ende 16 des Haltemittels 13 ist in Breitenrichtung B hinter dem vorderen Ende 12 der Greiferauflage 11 vorgesehen. Durch das leichte Überstehen des vorderen Endes 16 des Haltemittels 13 kann bei abgesenktem Haltemittel 13 das vordere Ende 16 in Kontakt mit einer Lebensmittelportion 10 kommen, die noch nicht auf der Greiferauflage 11 aufliegt. Diese Lebensmittelportion 10 kann dann durch Bewegung des Transportbandes 18 über das vordere Ende 12 der Greiferauflage 11 auf die Greiferauflage 11 bewegt werden. Durch Antrieb des Transportbandes 18 in umgekehrter Richtung kann die Lebensmittelportion 10 nach dem Verlagern und/oder Wenden wieder abgelegt werden. Alternativ oder zusätzlich zu der Bewegung des Transportbandes 18 kann eine Bewegung des Greifers 1 erfolgen um die Greiferauflage 11 unter die Lebensmittelportion 10 einzuschieben oder um die Lebensmittelportion 10 abzulegen.

Als Stellglied 21 ist in dieser Ausführungsform ein Drehstellglied vorgesehen, das ein Verkippen des an seinem von der vorderen Kante 16 beabstandeten Ende drehbar gelagerten Haltemittels 13 ermöglicht. Durch Aufbringen einer Haltekraft durch das Stellglied 21 kann die Lebensmittelportion 10 während des Verlagerns und/oder Wendens sicher zwischen dem Haltemittel 13 und der Greiferauflage 11 gehalten werden.

In Figur 5 ist eine weitere Ausführungsform eines erfindungsgemäßen Greifers 1 dargestellt. Die Grundstruktur 2 weist wiederum ein Befestigungselement 3 und einen Träger 23 auf, wobei in dem Träger 23 das Greiferelement 4 um die Drehachse A verdrehbar ist. Im Gegensatz zu den vorangegangenen Ausführungsformen ist nur ein einzelner Träger 23 vorgesehen, der somit keine Bewegung des Greiferelements 4 in Breitenrichtung B ermöglicht. Zu diesem Zweck ist ein Linearzylinder 24 vorgesehen, der um die Drehachse A drehbar im unteren Bereich des Trägers 23 gelagert ist. Der Linearzylinder 24 ermöglicht eine Verstellung eines Kolbens 25 in Breitenrichtung B. An den Kolben 25 schließt sich eine Greiferauflage 11 an, die somit mit dem Linearzylinder 24 in Breitenrichtung B verfahren werden kann. Ein Haltemittel 13 ist über einen Träger 26 direkt am Linearzylinder 24 befestigt. Im Gegensatz zu den vorangegangenen Ausführungsformen bewegt sich das Haltemittel 13 nicht zusammen mit der Greiferauflage 11, wenn diese in Breitenrichtung B verstellt wird. Somit kann das Haltemittel 13 die Funktion eines Niederhalters übernehmen, das heißt, eine Lebensmittelportion 10 in Position halten, während die Greiferauflage 11 unter die Lebensmittelportion 10 mittels des Linearzylinders 24 eingeschoben wird. Der Linearzylinder 24 kann pneumatisch, hydraulisch oder elektrisch betrieben sein. Weiterhin ermöglicht das Haltemittel 13 die Lebensmittelportion 10 fest auf der Greiferauflage 11 zu halten, wenn die Lebensmittelportion 10 gewendet werden soll. Zum Wenden der Lebensmittelportion 10 wird der Linearzylinder 24 zusammen mit der Greiferauflage 11 und dem Haltemittel 13 verdreht. Dafür ist ein Drehstellglied 5 in Form eines Motors mit einem Zahnrad 27 an dem Träger 23 angebracht. Das Zahnrad 27 greift in entsprechende Zähne 28, die am Umfang des Linearzylinders 24 vorgesehen sind, ein. Somit kann durch das Drehstellglied 5 eine Drehbewegung des Greiferelements 4 ermöglicht werden.

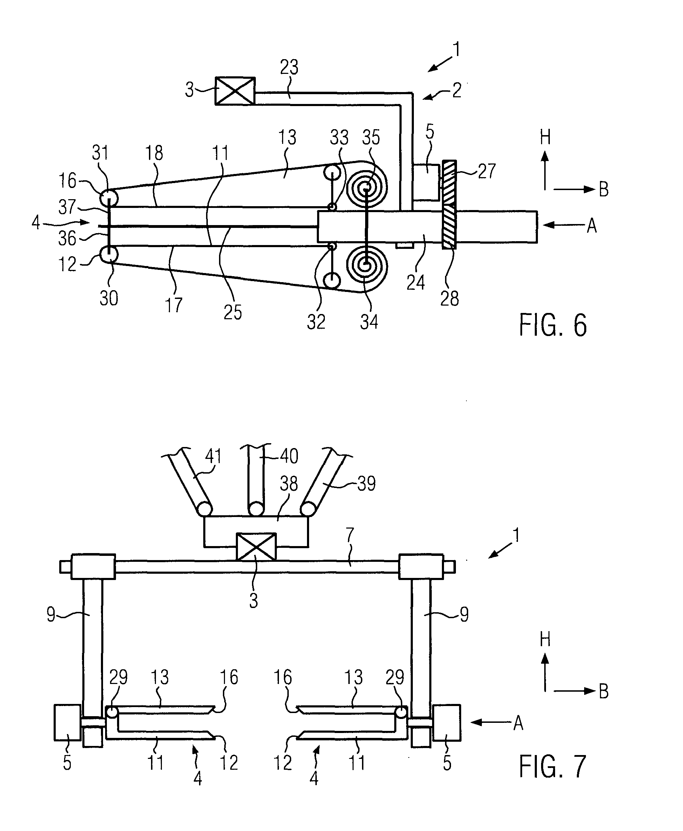

In Figur 6 ist eine sechste Ausführungsform eines erfindungsgemäßen Greifers 1 dargestellt. Wie der bereits in Figur 5 dargestellte Greifer 1, weist der Greifer 1 gemäß Figur 6 eine Grundstruktur 2 mit einem Befestigungselement 3 und einen Träger 23 auf. Im Träger 23 ist wiederum ein Linearzylinder 24 um die Drehachse A drehbar gelagert. Eine Verdrehung des Linearzylinders 24 erfolgt wiederum durch ein Drehstellglied 5 mit einem Zahnrad 27, das in Zähne 28 des Linearzylinders 24 eingreift. Mit dem Linearzylinder 24 kann ein Kolben 25 in Breitenrichtung B verstellt werden.

Die Greiferauflage 11 wird durch ein Transportband 17 gebildet, und das Haltemittel 13 umfasst ein Transportband 18. Auch in dieser Ausführungsform ist die Greiferauflage 11 und das Haltemittel 13 im Wesentlichen gleich ausgestaltet. In den vorderen Enden 12, 16 der Greiferauflage 11 und des Haltemittels 13 sind jeweils Umlenkrollen 30, 31 für das jeweilige Transportband 17, 18 vorgesehen. Die einander zugewandten Seiten der Transportbänder 17, 18 sind jeweils an einer Befestigungsstelle 32, 33 am Linearzylinder 24 befestigt. Das andere Ende des Transportbands ist jeweils auf abwickelbaren Rollen 34, 35 aufgewickelt, wobei die Rollen 34, 35 ebenfalls am Linearzylinder 24 befestigt sind. Die Umlenkrollen 30, 31 sind am vorderen Ende des Kolbens 25 befestigt und mittels Federn 36, 37 zueinander vorgespannt. In Figur 6 ist der Kolben 25 in seiner ausgefahrenen Stellung gezeigt. Wenn der Kolben 25 eingefahren wird, verbleiben die einander jeweils zugewandten Seiten der Transportbänder 17, 18 im Wesentlichen stationär, während das Transportband 17, 18 um die Rollen 30, 31 umgelenkt wird und auf die Rollen 34, 35 aufgewickelt wird. Eine Lebensmittelportion 10, die auf den Transportbändern 17, 18 aufliegt, beziehungsweise durch diese gehalten wird, wird somit abgelegt. Der Aufnahmevorgang einer Lebensmittelportion 10 erfolgt umgekehrt: der Kolben 25 wird ausgefahren, wobei die Transportbänder 17, 18 nun so um die Umlenkrollen 30, 31 umgelenkt wird, dass die Lebensmittelportion 10 auf die Greiferauflage 11 gefördert wird. Wenn die Lebensmittelportion 10 auf der Greiferauflage 11 aufliegt, wird sie in dieser Position durch die elastische Kraft der Federn 36, 37 zwischen den Transportbändern 17, 18 gehalten. Alternativ kann statt den Federn 36, 37 auch ein aktives Stellglied vorgesehen sein, das die Greiferauflage 11 und das Haltemittel 13 zueinander hin und voneinander weg bewegt.

Wenn die Lebensmittelportion 10 zwischen der Greiferauflage 11 und dem Haltemittel 13 gehalten wird, kann das Drehstellglied 5 aktiviert werden, so dass der Linearzylinder um die Drehachse A verdreht wird und die Lebensmittelportion 10 gewendet wird.

In manchen Ausführungsformen kann auch nur die Greiferauflage 11 mit einem Transportband versehen sein, und das Haltemittel nicht.

In den vorgenannten Ausführungsformen wurden jeweils Einzelgreifer, das heißt Greifer mit nur einem Greiferelement 4 dargestellt. Die Greiferelemente 4 aus Figuren 1 bis 6 können aber auch in einem doppelseitigen Greifer eingesetzt werden.

In Figur 7 ist ein erfindungsgemäßer doppelseitiger Greifer 1 dargestellt, in dem zwei Greiferelemente 4 vorgesehen sind, die zueinander hinbewegt werden können. Der Greifer 1 weist wiederum ein Befestigungselement 3 auf, an dem ein oberer Träger 7 vorgesehen ist.

Das Befestigungselement 3 ist an einer Werkzeugbefestigung 38 eines Delta-Roboters befestigt, die mittels der Roboterarme 39, 40, 41 bezüglich einer nicht dargestellten Roboterbasis bewegt werden kann.

An dem oberen Träger 7 sind zwei untere Träger 9 in Breitenrichtung B verstellbar angeordnet. Im unteren Bereich der unteren Träger 9 ist jeweils ein Drehstellglied 5 vorgesehen, das eine Verdrehung der zwei aufeinander ausgerichteten Greiferelemente 4 ermöglicht. Die Verdrehung der Greiferelemente 4 erfolgt jeweils um die gemeinsame Drehachse A. Jedes der Greiferelemente 4 weist eine Greiferauflage 11 auf, deren vordere Enden 12 aufeinander ausgerichtet sind. Weiterhin weist jedes Greiferelement 4 ein Haltemittel 13 auf, das um ein Drehgelenk 29, das dem vorderen Ende 16 der Haltemittel 13 gegenüberliegt, verschwenkt werden kann. Somit kann das vordere Ende 16 des Haltemittels 13 auf die Greiferauflage 11 zu abgesenkt werden, um eine auf der Greiferauflage 11 aufliegende Lebensmittelportion 10 festzuhalten.

Im Betrieb wird eine Lebensmittelportion 10 dadurch mit dem Greifer 1 ergriffen, dass der Greifer 1 zunächst mit auseinander gefahrenen Greiferelementen 4 über der Lebensmittelportion 10 abgesenkt wird, sodass die Lebensmittelportion 10 zwischen den Greiferelementen 4 angeordnet ist. Dann werden die Greiferelemente 4 durch Verschiebung der unteren Träger 9 bezüglich des oberen Trägers 7 aufeinander zugefahren, so dass die Lebensmittelportion 10 gleichzeitig auf die Auflageflächen 11 beider Greiferelemente 4 aufgeschoben wird. Dann wird das Haltemittel 13 abgesenkt. Sobald der Greifer 1 durch einen Roboter leicht angehoben wurde, können die Drehstellglieder 5 angesteuert werden, so dass die Greiferelemente 4 gemeinsam und synchron verdreht werden.

Zeitgleich wird der Greifer 1 mittels eines Roboters verfahren, bis der Greifer 1 in einer neuen gewünschten Position ist, in der die gewendete Lebensmittelportion 10 abgelegt werden soll. In dieser Position werden die Greiferelemente 4 durch Verschieben der unteren Träger 9 auf dem oberen Träger 7 auseinander gefahren, so dass die Lebensmittelportion 10 abgelegt wird.

Somit ermöglichen die erfindungsgemäßen Greifer ein Wenden der Lebensmittelportion 10 um eine Drehachse A. Ein Wenden der Lebensmittelportion 10 um andere Drehachsen kann durch Verdrehen des Greifers 1 durch den Roboter erreicht werden.

In der Ausführungsform gemäß Figur 7 kann insbesondere ein Transportband auf der Greiferauflage 11 und/oder auf dem Haltemittel 13 vorgesehen sein, um eine Aufnahme der Lebensmittelportionen 10 zu erleichtern.

## Patentansprüche

1. Greifer (1) für einen Roboter zum Handhaben von Lebensmittelportionen (10), wobei der Greifer (1) umfasst:
eine Grundstruktur (2), die an dem Roboter anbringbar ist, und
ein Greiferelement (4), mit einer Greiferauflage (11), die unter eine Lebensmittelportion (10) eingeführt werden kann,
**dadurch gekennzeichnet, dass**
das Greiferelement (4) ein Haltemittel (13) umfasst, das in Richtung der Flächennormalen (F) der Auflagefläche der Greiferauflage (11) von der Greiferauflage (11) beabstandet angeordnet ist, wobei das Greiferelement (4), insbesondere zum Wenden der Lebensmittelportion (10) bezüglich der Grundstruktur (2) um eine Drehachse (A) verdrehbar ist.

2. Greifer nach Anspruch 1,
**dadurch gekennzeichnet, dass**
an der Grundstruktur ein Drehstellglied (5) zum Verdrehen der Drehachse (A) angebracht ist.

3. Greifer nach einem der vorangehenden Ansprüche, wobei die Drehachse (A) in eine andere Richtung als die Flächennormale (F) der Auflagefläche der Greiferauflage (11) weist.

4. Greifer nach einem der vorangehenden Ansprüche, wobei die Drehachse (A) im Wesentlichen orthogonal zur Flächennormalen (F) der Auflagefläche der Greiferauflage (11) ist.

5. Greifer nach einem der vorangehenden Ansprüche, wobei das Haltemittel (13) eine Halteauflage (15) mit einer der Greiferauflage (11) zugewandten Auflagefläche bildet.

6. Greifer nach einem der vorangehenden Ansprüche, wobei die Greiferauflage (11) und/oder das Haltemittel (13) ein Transportband (17) zur Aufnahme und Ablage der Lebensmittelportion (10) umfasst.

7. Greifer nach einem der vorangehenden Ansprüche, wobei das Greiferelement (4) bezüglich der Grundstruktur (2) translatorisch bewegbar ist, um die Lebensmittelportion (10) zu untergreifen.

8. Greifer nach einem der vorangehenden Ansprüche, wobei die Bewegung des Transportbandes (17, 18) und die translatorische Bewegung des Greiferelements (4) synchronisiert sind.

9. Greifer nach einem der vorangehenden Ansprüche, wobei die Greiferauflage (11) und das Haltemittel (13) mit einem Stellglied (21) zueinander hin bewegbar sind.

10. Greifer nach einem der der vorangehenden Ansprüche, wobei das Haltemittel (13) mit einem Stellglied (14) zu der Greiferauflage (11) hin bewegbar ist.

11. Greifer nach einem der vorangehenden Ansprüche, wobei zwei Greiferelemente (4) vorgesehen sind, die bezüglich der Grundstruktur (2) zueinander hinbewegt werden können, um von unterschiedlichen Seiten die Lebensmittelportion (10) gleichzeitig zu untergreifen.

12. Greifer nach einem der vorangehenden Ansprüche, wobei zwischen dem Haltemittel (13) und der Greiferauflage (11) ein elastisches Element (22) vorgesehen ist, das das Haltemittel (13) hin zur Greiferauflage (11) vorspannt.

13. Roboter mit einem Greifer nach einem der vorangehenden Ansprüche, wobei der Roboter ein Delta-Roboter ist.

14. Verfahren zum Handhaben von Lebensmittelportionen (10), mit einem Greifer (1) eines Roboters, mit den folgenden Schritten:
- Anordnen einer Lebensmittelportion (10) auf einer Greiferauflage (11) eines Greiferelements (4),
- Verdrehen des Greiferelements (4) bezüglich einer Grundstruktur (2) des Greifers (1), während die Lebensmittelportion (10) von einem Haltemittel (13) im Greiferelement (4) gehalten wird, und
- Ablegen der gewendeten Lebensmittelportion (10).

15. Verfahren nach Anspruch 14, wobei der Schritt des Anordnens der Lebensmittelportion (10) auf der Greiferauflage (11) des Greiferelements (4) ein Einschieben der Greiferauflage (11) unter die Lebensmittelportion (10) umfasst.
